# EUROPEAN PATENT SPECIFICATION

(11) **EP 2 846 958 B1**
(45) Date of publication and mention of the grant of the patent: **17.10.2018**
(21) Application number: 13798417.5
(22) Date of filing: 13.05.2013
(51) Int. Cl.: B23K 26/34, B23K 35/30

(54) **LASER ADDITIVE REPAIRING OF NICKEL BASE SUPERALLOY COMPONENTS**
LASERADDITIVREPARATUR VON SUPERLEGIERUNGSKOMPONENTEN AUF NICKELBASIS
RÉPARATION ADDITIVE PAR LASER DES COMPOSANTS EN SUPERALLIAGE À BASE DE NICKEL

(30) Priority: 11.05.2012 US 201261645863 P; 06.06.2012 US 201213489863; 10.05.2013 US 201313891314
(43) Date of publication of application: 18.03.2015
(73) Proprietor: Siemens Energy, Inc., Orlando, FL 32826-2399 (US)
(72) Inventor: OZBAYSAL, Kazim, Orlando, Florida 32828 (US)
(74) Representative: Maier, Daniel Oliver
(86) International application number: PCT/US2013/040742
(87) International publication number: WO 2014/025432

(56) References cited:
- DE-A1-102010 041 284
- DE-A1-102010 041 284
- KRISTA AMATO ET AL: "Comparison of Microstructures and Properties for a Ni-Base Superalloy (Alloy 625) Fabricated by Electron Beam Melting", JOURNAL OF MATERIALS SCIENCE RESEARCH,, vol. 1, no. 2, 1 January 2012 (2012-01-01) , pages 3-41, XP009176859,
- Tresa Pollock ET AL: "Nickel-Based Superalloys for Advanced Turbine Engines: Chemistry, Microstructure, and Properties", , 1 March 2006 (2006-03-01), pages 361-374, XP055073292, Retrieved from the Internet: URL:http://deepblue.lib.umich.edu/bitstrea m/handle/2027.42/77223/AIAA-18239-462.pdf [retrieved on 2013-07-29]
- KRISTA AMATO ET AL: "Comparison of Microstructures and Properties for a Ni-Base Superalloy (Alloy 625) Fabricated by Electron Beam Melting", JOURNAL OF MATERIALS SCIENCE RESE,, vol. 1, no. 2, 1 January 2012 (2012-01-01) , pages 3-41, XP009176859, DOI: 10.5539/JMSR.V1N2P3
- Tresa Pollock ET AL: "Nickel-Based Superalloys for Advanced Turbine Engines: Chemistry, Microstructure, and Properties", , 1 March 2006 (2006-03-01), pages 361-374, XP055073292, DOI: 10.2514/1.18239 Retrieved from the Internet: URL:http://deepblue.lib.umich.edu/bitstrea m/handle/2027.42/77223/AIAA-18239-462.pdf [retrieved on 2013-07-29]

## Description

### FIELD OF THE INVENTION

The present invention relates to a method of repair additive build up of a nickel base superalloy with significant titanium and aluminum content.

### BACKGROUND OF THE INVENTION

Nickel base superalloys (also known as nickel based or nickel-based) are high-temperature materials which display excellent resistance to mechanical and chemical degradation of properties even as temperatures approach the melting points of the materials. Ni base superalloys are based upon nickel(Ni) and typically contain numerous other elements such as chromium (Cr), aluminum (Al), titanium (Ti), tungsten (W), cobalt (Co), tantalum (Ta), carbon (C), among others. Such high-temperature superalloys found early application in aircraft turbine engines. A higher operating temperature typically leads to increased fuel efficiency and lower carbon emissions, causing superalloys to find increasing uses in ground-bases turbine systems as well. For example, see The Superalloys, by Roger C. Reed, (Cambridge University Press, 2006, particularly Chapter 1.

The Al and Ti content of Ni base superalloys is typically increased in order to improve the high temperature strength, but at the expense of introducing challenges in welding or weld buildup of such materials. Generally, increased Al and/or Ti content of a Ni base superalloy increases the susceptibility of the material to cracking during welding or weld build up. Our previous work in this field cited above addressed the improvement in the weld repair of such superalloys. The present work addresses the related problem of weld build up of material while reducing the susceptibility to cracking of the materials so constructed.

Thus a need exists in the art for improved methods to build up Ni base superalloy materials by a weld build up process, typically a laser additive repair process, particularly for those superalloys including relatively large amounts of Al and/or Ti.

The following journal article is of general relevance to the present invention: KRISTA AMATO ET AL, "Comparison of Microstructures and Properties for a Ni-Base Superalloy (Alloy 625) Fabricated by Electron Beam Melting", JOURNAL OF MATERIALS SCIENCE RESEARCH, vol. 1, no. 2, 1 January 2012, pages 3 - 41, XP009176859. This journal article discloses the processing of Nickel-based superalloys by additive manufacturing. It discloses that this produces directional solidification which equals or improves mechanical properties as compared to cast and wrought alloys. Inconel 625 cylinders are manufactured by electron beam melting (EBM) and selective laser melting (SLM) and compared. EBM fabricated components contained columnar plates of γ" (Ni₃Nb) precipitates, while SLM fabricated components contained columnar arrays of fine γ" nanoparticles. EBM fabricated and HIPed (Hot Isostatic Pressed) samples and SLM fabricated and HIPed samples exhibited equiaxed grains, but both contained complex arrays of dissimilar precipitates.

### SUMMARY OF THE INVENTION

The present invention is specified in claim 1 of the following set of claims.

Preferred features of the present invention are specified in claims 2 to 4 of the set of claims.

It is one objective of the processes described herein to provide a process for build up of Ni based superalloy materials from powder by heating and controlled stepwise cooling of the material so as to produce no more than about 20% γ' phase in any single cool and hold portion of the process, as well as no more than about 20% γ' phase in the final room temperature material.

Nickel base superalloys with large amounts of Al and Ti contents are known to be difficult to weld build up. As the Al and Ti content of a superalloy is increased to improve the component high temperature strength, weldability of the component is drastically reduced. The processes described herein employ elemental partitioning of Al and Ti to γ and γ' through a controlled step cool and hold process. The time-temperature protocol of the step cool and hold process is chosen so as to deplete the γ from Al and Ti in order to improve weldability. When the Al and Ti content of the γ in the weld build up is reduced to a weldable region of no more than about 20% γ', the controlled step cool and hold process is replaced with regular weld argon cooling.

The processes described herein provide for elemental partitioning of Al and Ti during the hold and cool process so as to deplete γ from Al and Ti and to reduce susceptibility to cracking in the material so produced.

### BRIEF DESCRIPTION OF THE DRAWINGS

FIG. 1 is a graphical depiction of the weldability of some superalloys as a function of Ti and Al content.
FIG. 2 shows graphical depictions of details of hold and cool processes:
   (2A) Elemental partitioning at full phase equilibrium from Ni-Al pseudo binary phase diagram.
   (2B) Shift in TTT (time-temperature-transformation) diagram due to step cool and hold process.
   (2C) Anticipated stress relief of a welded interface at each hold temperature during partitioning of Al and Ti.
   (2D) Shift of composition of alloy 247 to crack free region due to partitioning.

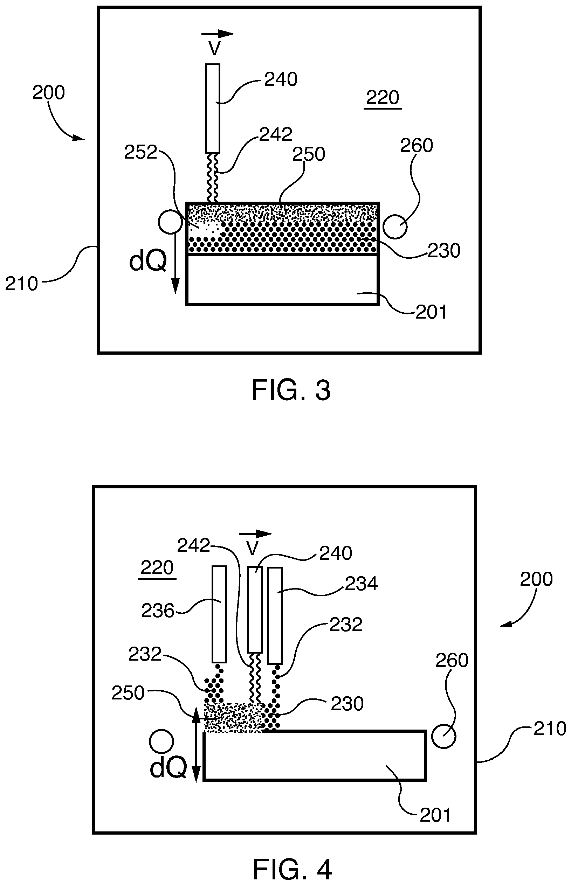

FIG. 3 is a schematic depiction of typical apparatus for performing a hold and cool process with preplaced powder.
FIG. 4 is a schematic depiction of typical apparatus for performing a hold and cool process with concurrently placed powder.

### DETAILED DESCRIPTION

All percentages given herein are weight percent unless otherwise specified.

Ti and Al are typically added to Ni base superalloys to increase the high temperature strength of the component, but with the disadvantage of drastically increasing the difficulty of producing satisfactory welds or weld build ups. For economy of language we refer hereinafter to Ni base superalloy with relatively high Al, Ti content as simply "Ni base superalloys" or "Ni superalloys." The welds or weld build ups typically produced with such Ni superalloys are susceptible to cracking either during the weld or build up process or in subsequent repair steps involving these materials. Previous work by the present inventors (cited above) involving a detailed study of factors affecting weldability of Ni base superalloys and their susceptibility to cracking has led the present inventors to conclude that a γ' phase present in an amount generally less than about 20 weight percent is indicative of weldability without unacceptable susceptibility to cracking. A γ' content greater than about 60% is generally indicative of nonweldability (that is, susceptibility to strain age cracking) while intermediate γ' values typically indicate difficult and expensive welding. Substantially the same conclusions can be drawn for additive or weld build up processes. That is, a γ' phase present in an amount less than about 20 weight percent is indicative of weld build up without unacceptable susceptibility to cracking, γ' greater than about 60% is generally indicative of weld build up having an unacceptable susceptibility to cracking.

Additive manufacturing by laser beam weld build up (also called build-up welding or build up welding) is comparable to plasma build up welding as well as plasma spraying. To be concrete in our description, we discuss herein the important practical case in which a laser beam provides the directed energy to heat the material as desired. This is not to exclude other sources of directed energy such as plasma, second laser, electron beam, among others as would be apparent to those having ordinary skills in the art. However, for economy of language we refer to all such additive build up processes as laser additive processes or laser weld build up or equivalent language.

Previous work by this inventor (cited above) focused on reducing cracking in the welding of Ni base superalloys. The work described herein relates to the additive build up of a layer of material (typically from about 1 millimeter (mm) to about 50 mm in thickness). The present discussion is directed to the repair build up (typically 1-50mm thick) that has favorable welding characteristics, that is, reduced susceptibility to cracking. Thus, the present description relates to the fabrication of a Ni base superalloy material or component having favorable welding properties. It is anticipated that such materials or components can be fabricated for use in myriad applications apparent to one having ordinary skill in the art.

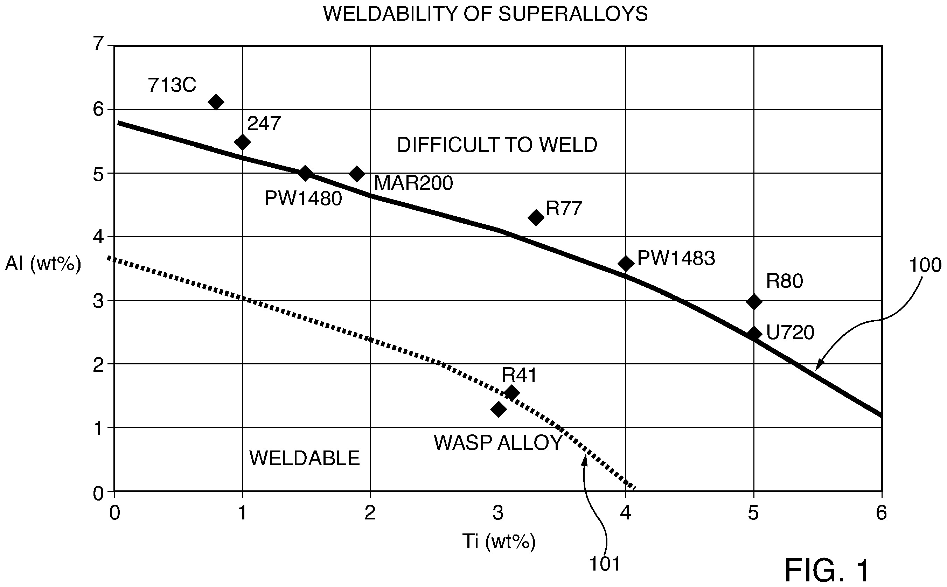

FIG. 1 is a graphical depiction of the weldability of typical Ni base superalloys as functions of the Al and Ti content. Those alloys lying above line 100 in FIG. 1 are generally considered not to be weldable, and hence, not amenable to weld build up. In practice, this typically means that materials having compositions above line 100 produce materials susceptible to strain age cracking in the fusion zone (FZ). Thus, whenever such components in commercial equipment require repair, they are typically replaced rather than repaired since the susceptibility to cracking will result in a large fraction of failed repairs.

Conversion of the compositions given in FIG. 1 to the fraction of various phases present shows that nonweldable alloys generally have more than about 60% γ' phase in their final structure. In contrast, the weldable Ni base superalloys depicted in FIG. 1 have generally less than about 20% γ' phase in their final structure, below line 101 in FIG. 1. Therefore, it is anticipated that Ni base superalloys with less than about 20% γ' will be weldable without detrimental amounts of strain age cracking in the FZ.

Heat affected zone (HAZ) cracking in high strength Ni base superalloys occurs due to the presence of grain boundaries containing low melting point elements. A large heat input during laser build up thus creates a large HAZ and results in a large amount of HAZ cracking due to melting at the grain boundaries. This is a common problem in previous build up processes in which a laser beam typically interacts with the base metal during powder deposition. Thus, an important problem in the field of additive build up of superalloys is to produce crack free, near 100% base metal laser build up, particularly on the important commercial use of superalloys for gas turbine components. As described in detail herein, one advantage of the present processes relates to the creation of a relatively small HAZ, typically no more than about 100 µm HAZ µm = micron = 10⁻⁶ meter).

Use of a welding apparatus 200 includes placing a component substrate 201 into a chamber 210 containing an inert atmosphere 220 and predepositing the powder 230 to be melted in front of the moving laser 240 onto the substrate 201 having substantially the same composition as the powder 230, as depicted schematically in FIG. 3. Alternative use includes concurrent deposition of the powder 230 before and/or after the application of the laser 240 energy dQ, as depicted in FIG. 4. To be concrete in our description, we describe in most detail the example of preplaced powder depicted in FIG. 3, understanding thereby that modifications to handle concurrent powder placement (FIG. 4), are modifications of the techniques described for preplaced powder, apparent to one having ordinary skill in the art.

In contrast to typical weld build up processes, the processes described herein include some or all of the following steps:
a: Prep lacing the powder 230 onto a component substrate or substrate 201 where a buildup of the same composition is desired and both powder and substrate have substantially the same composition (FIG. 3), or laying the powder in front and behind the moving laser beam 242 (or other directed energy beam, as shown in FIG. 4.
b: Heating the preplaced powder 230 to above about 1200 deg. C.
c: Laser 240 melting the preplaced powder 230 so as to produce a heat affected zone (HAZ less than about 100 microns in extent).
d: Producing a known fraction of γ' during each cooling step in the cooling of the solidified powder 250, resulting in;
e: Partitioning Al and Ti between γ and γ' to reduce fusion zone (FZ) cracking susceptibility.

These procedures represent an improvement over conventional build up techniques for superalloys that are generally not completely successful in eliminating strain age cracking and incipient melting. To avoid cracking, some previous techniques employ a lower-temperature method such as brazing but this typically has the disadvantage of lowering strength.

Nearly all commonly used laser build up processes include interaction of the laser beam with the base material. This process causes the HAZ to be large and increases the susceptibility of the base metal to grain boundary cracking. Powder of the same or similar composition as the component is preplaced onto the surface of the component where build up is needed to a thickness of about 1.0 mm to 50 mm (millimeter). Powder size is typically in the range from about 10 microns to about 100 microns.

This preplaced powder is heated under an inert atmosphere with a first heat source to about 1200 deg. C and held at that temperature for a minimum of 5 minutes to dissolve substantially all γ' phase. An induction coil 260 may advantageously be used as this first heat source as depicted in FIG. 3. This is by way of illustration and not limitation as other first heat sources could also be employed as would be apparent to one having ordinary skill in the art.

A second heat source such as a laser 240 generating a laser beam 242 or other directed energy source, scans the preplaced powder 230 and heats the powder. The powder 230 thus melts and solidifies to a certain first depth 250 as depicted in FIG. 3A. To avoid producing an overly large HAZ, the laser power dQ is advantageously adjusted so that more than one laser scan is typically required to melt and solidify the preplaced powder. That is, the laser power dQ is adjusted so that a relatively small amount of dilution with the base metal occurs when the melting process of the preplaced powder 230 is finished, understanding that small dilution means a small HAZ.

FIG. 3 is a schematic depiction of typical melting apparatus 201 for preplaced powder 230 (FIG. 3) and for concurrently placed powder 230 (FIG. 4). Preplaced powder 230 prevents the fully intense laser beam 242 from interacting with the substrate 201 base metal and causing a large HAZ. Preheating the powder 230 is aimed at reducing the FZ cracks. Preplacing the powder 230 is aimed at preventing the laser beam 242 from interacting with the substrate 201 base metal and reducing grain boundary cracking.

In FIG. 4, a thin layer of preplaced powder 230 is heated to approximately 1200 deg. C by the induction preheater and, once the laser begins scanning, further heating of the preplaced powder occurs. A laser beam 242 moves over and melts this preplaced powder 230, fusing it to the base material while additional powder 232 is continuously preplaced in front of and behind the moving laser. The process is repeated for as many layers of powder as desired. This process depicted schematically in FIG. 4 likewise employs the concept of the laser beam 242 striking the powder 230 and not the substrate.

In the first pass over the preplaced powder 230 (FIG. 3), only the top portion of the preplaced powder is melted 250, typically only a few microns per pass. Following passes melt layers 252 having similar thicknesses until the final layer in contact with the substrate 201 base metal is melted and fusion is accomplished. This method significantly reduces the HAZ thickness since direct contact of the laser beam 242 with the substrate 201 base metal is substantially reduced.

Once the melting process for the preplaced powder 230 is finished and the molten powder solidifies to a temperature of no less than 1200 deg. C, the solidified powder 250 is held at that temperature a minimum of one minute followed by a hold and cool process.

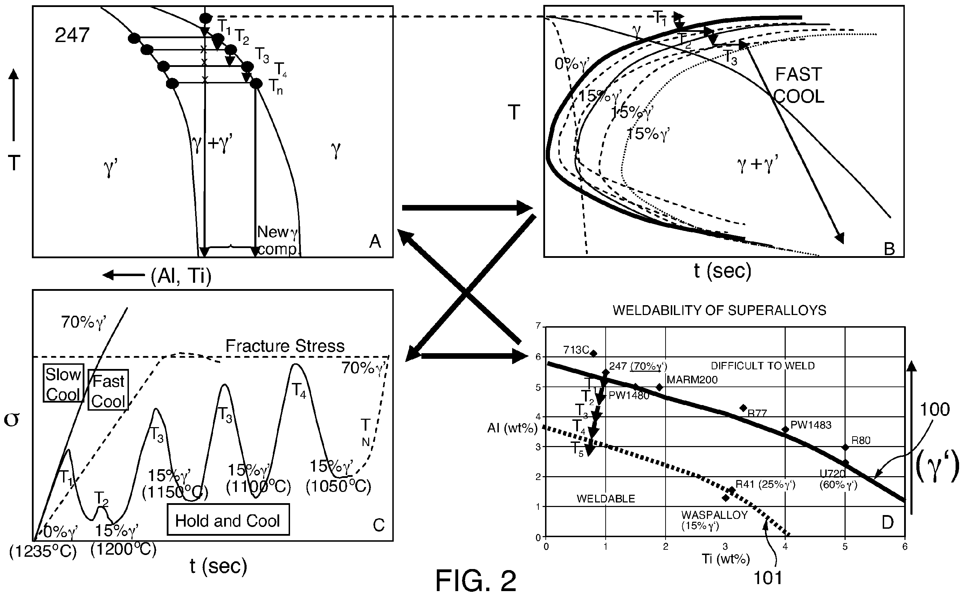

The hold and cool process employs the elemental partitioning of Al and Ti to γ and γ' in full thermodynamic phase equilibrium to accomplish no more than 20% γ' formation at any time during the joining and build up process. The process depletes the γ from Al and Ti. The final γ composition is moved to the weldable region at the end of the SCH (stepwise hold and cool) process as shown in FIG. 2 to prevent strain age cracking (FZ cracking).

FIG. 2 is a schematic depiction of metallurgical reactions for high strength Ni base superalloys which are laser built up with processes described herein. When the laser melting operation is finished the heat source (e.g., the induction coil 260 in FIG. 3, or similar heat source) is operational and the following process is utilized.
a. Hold at T₁ for 1-3 minutes.
b. Cool to T₂ and hold for 2-15 min: Produce less than 20% γ'
c. Cool to T₃ and hold for 2-30 min: Produce less than 20% γ'
d. Cool to T₄ and hold for 0.1-2 hrs: Produce less than 20% γ'
   ..
   ..
   ..
   ..
Cool to Tₙ and hold for 1-20 hrs (n=1-20): Produce less than 20% γ'
Cool to room temperature to produce final γ' content, which is less than about 20%.

Two heat sources are advantageously employed. First heat source is used to melt the preplaced powder, typically a laser beam 240 or other directed energy beam, as depicted schematically in FIG. 3. A second heat source is used for pre-heating deposited powder and for the controlled cool and hold portion of the process. This second heat source is conveniently taken to be an induction coil 260 as depicted in FIGs. 3 and 4 but other heating sources are not excluded. This induction coil 260 or other second heat source adjusts the temperature of the weld build up in order to produce 20% or less γ' from the γ at any hold temperature. Elemental partitioning of Al and Ti into γ and γ' is calculated from the processing conditions employed making use of available thermodynamic data. Conditions are chosen so as to produce a maximum 20% γ' formation at any hold temperature. Hold times to reach 20% γ' are calculated from known phase transformation kinetics of the γ-γ' system such as those available through the JMatPro thermodynamic software available through Sente Software, Inc., Pittsburgh, PA.

Thus, briefly stated, there is the laser build up of Ni base superalloy materials generally considered to be non-weldable as would be useful, for example, in the build up of substantially crack free, near 100% base metal build up on gas turbine components.

The welding process described herein makes use of elemental partitioning of Al and Ti into γ and γ' phases through a step cool and hold process. This depletes the γ phase from Al in a controlled fashion and Ti and improves weldability, typically be achieving a low weight % of γ'. When the Al and Ti content of the stress relieved γ in the joint is reduced to weldable values, the step cool and hold process is terminated and replaced with conventional weld argon cooling.

Two heat sources are used. One heat source (the first) is used for melting/joining as in a conventional welding process. A laser heat source 240 is advantageously used as this first heat source but other heat sources are not inherently excluded such as arcs, discharges, electron beams, particle beams, among others.

The other (second) heat source is used for an initial heating of prepositioned powder and for the hold and cool portion of the process. This second heat source adjusts the isothermal hold temperature of the joint to produce no more than about 20% γ' at any isothermal hold temperature. An induction heat source 260 is advantageously used as this second heat source but other heat sources are not inherently excluded. Of course, when the powder 230 is deposited concurrently with the melting step, as depicted in FIG. 4 for example, preheating temperature is not known precisely. However, even with concurrent deposition of powder, the preplaced powder quickly reaches the temperature of the bare metal of the substrate 201.

One important goal of the concurrent deposition of powder as depicted in FIG. 4 is to prevent the laser beam 242 from interacting directly with the bare metal substrate 201. However, it is important for success of the step, hold and cool process to start at a temperature of about 1200 deg. C or above. The concurrent deposition process achieves this start temperature by the use of an induction heater 260 as well as the heating of the powder by the adjacent laser-generated melt pool 250.

Elemental partitioning of Al and Ti is calculated from available thermodynamic data that allows a maximum 20% γ' formation at any isothermal hold temperature. Hold times needed to achieve 20% γ' are calculated from the known phase transformation kinetics of the γ-γ' system. Alloys of particular interest here include those noted on FIG. 1.

Cooling of a Ni base γ' superalloy from its melting temperature results in such superalloys going through a transition from γ phase to γ + γ' phases. The hold and cool process described herein employs the elemental partitioning of Al and Ti into γ and γ' phases in full thermodynamic phase equilibrium to produce no more than 20% γ' at any hold time during the hold and cool process. This depletes the γ phase from Al and Ti and moves the final γ composition into the weldable region as depicted in FIG. 1.

In this process as depicted in FIG. 2, γ is depleted from Al and Ti through elemental partitioning until its final composition is reduced below the weldable line 100 in FIG. 2D. Compositional change of γ is shown with spots T₁ - Tₙ in FIG. 2A. FIGs. 2B and 2C show the anticipated shift in the cooling curves and the stress vs. time curve after each hold step due to stress relief of the weld at each hold step.

It is expected that the general hold and cool process as described herein can be used on almost any superalloy that experiences strain age cracking. Elemental partitioning of Al and Ti during the hold portions of the process reduces the likelihood of strain age cracking and hot cracking. Such partitioning also significantly reduces the tendency towards strain age cracking during post weld heat treatment since γ is substantially depleted from Al and Ti, and stress relieved, at each step of the hold and cool process.

## Claims

1. A method of repair additive build up of a nickel (Ni) base superalloy with significant titanium (Ti) and aluminum (Al) content comprising:
a) prep lacing a Ni base superalloy powder having substantial Ti and Al content onto a substrate of substantially the same or similar composition as the Ni base superalloy powder;
b) preheating the prep laced powder to a temperature above 1200 deg. C with a first heat source;
c) melting the preplaced powder with one or more passes of a directed energy beam second heat source so as to produce a heat affected zone having a width less than 100 microns, removing the second heat source when melting is completed;
d) performing a controlled step and hold cooling of the melted preplaced powder with the first heat source such that a known fraction of the γ' phase is formed during the step and hold cooling; and,
e) adjusting the step and hold cooling such that the partition of Al and Ti between the γ and γ' phases in the additive build up causes a reduction in cracking susceptibility,
wherein the step and hold cooling is from an initial temperature T₁ of 1200 deg. C or above and to room temperature and consists of a plurality of steps:
a. Holding at T₁ for a time in the range from 1 min to 3 min;
b. Cooling to a temperature T₂ lower than T₁ and hold for a time in the range from 2 min to 15 min so as to produce less than 20 weight percent γ' phase;
c. Cooling to a temperature T₃ lower than T₂ and hold for a time in the range from 2 min to 30 min so as to produce less than 20 weight percent γ' phase;
d. Cooling to a temperature T₄ lower than T₃ and hold for a time in the range from 6 min to 120 min so as to produce less than 20 weight percent γ' phase; and
e. Cooling to room temperature in a plurality of cooling steps from T₄ to room temperature wherein the temperature at each step is maintained from 1 hour to 20 hours, so as to produce less than 20 weight percent γ'.

2. A method as in claim 1 wherein the thickness of the additive build up is in the range from 1 millimeter to 10 millimeters.

3. A method as in claim 1 wherein the preplaced powder has a particle size in the range from 10 microns to 100 microns.

4. A method as in claim 1 wherein said nickel base superalloy is selected from the group consisting of: 713C, 247, PW1480, MARM200, R77, PW1483, R80, U720, 738 or mixtures thereof.

## Patentansprüche

1. Verfahren zum additiven Aufbau einer Superlegierung auf Nickelbasis (Ni) mit signifikantem Gehalt an Titan (Ti) und Aluminium (Al) für Reparaturzwecke, umfassend:
a) Aufbringen eines Pulvers einer Superlegierung auf Ni-Basis mit einem wesentlichen Gehalt an Ti und Al im Voraus auf einem Substrat von im Wesentlichen derselben oder ähnlicher Zusammensetzung wie das Pulver der Superlegierung auf Ni-Basis;
b) Vorerwärmen des vorher aufgebrachten Pulvers auf eine Temperatur über 1200 Grad C mit einer ersten Wärmequelle;
c) Schmelzen des vorher aufgebrachten Pulvers mit einem oder mehreren Durchgängen eines gerichteten Energiestrahls einer zweiten Wärmequelle, um so einen von Wärme beeinflussten Bereich mit einer Breite von weniger als 100 Mikrometern zu erzeugen, wobei die zweite Wärmequelle entfernt wird, wenn das Schmelzen beendet ist;
d) Durchführen einer gesteuerten "Step-and-Hold"-Abkühlung des geschmolzenen vorher aufgebrachten Pulvers mit der ersten Wärmequelle, so dass ein bekannter Anteil der γ'-Phase während der "Step-and-Hold"-Abkühlung gebildet wird; und
e) Einstellen der "Step-and-Hold"-Abkühlung, so dass die Aufteilung von Al und Ti zwischen der γ- und der γ'-Phase in dem additiven Aufbau eine Verringerung der Rissanfälligkeit bewirkt,
wobei die "Step-and-Hold"-Abkühlung von einer Anfangstemperatur T₁ von 1200 Grad C oder darüber bis Raumtemperatur durchgeführt wird und aus mehreren Schritten besteht:
a. Halten bei T₁ für eine Zeit im Bereich von 1 min bis 3 min;
b. Abkühlen auf eine Temperatur T₂, die niedriger als T₁ ist, und Halten für eine Zeit im Bereich von 2 min bis 15 min, um so weniger als 20 Gewichtsprozent γ'-Phase zu erzeugen;
c. Abkühlen auf eine Temperatur T₃, die niedriger als T₂ ist, und Halten für eine Zeit im Bereich von 2 min bis 30 min, um so weniger als 20 Gewichtsprozent γ'-Phase zu erzeugen;
d. Abkühlen auf eine Temperatur T₄, die niedriger als T₃ ist, und Halten für eine Zeit im Bereich von 6 min bis 120 min, um so weniger als 20 Gewichtsprozent γ'-Phase zu erzeugen; und
e. Abkühlen auf Raumtemperatur in mehreren Abkühlungsschritten von T₄ bis Raumtemperatur, wobei die Temperatur in jedem Schritt 1 Stunde bis 20 Stunden beibehalten wird, um so weniger als 20 Gewichtsprozent γ' zu erzeugen.

2. Verfahren nach Anspruch 1, wobei die Dicke des additiven Aufbaus im Bereich von 1 Millimeter bis 10 Millimeter liegt.

3. Verfahren nach Anspruch 1, wobei das vorher aufgebrachte Pulver eine Teilchengröße im Bereich von 10 Mikrometern bis 100 Mikrometer aufweist.

4. Verfahren nach Anspruch 1, wobei die Superlegierung auf Nickelbasis aus der Gruppe ausgewählt ist, welche aus 713C, 247, PW1480, MARM200, R77, PW1483, R80, U720, 738 oder Mischungen davon besteht.

## Revendications

1. Procédé de réparation, par accumulation additive, d'un superalliage à base de nickel (Ni) à teneur notable en titane (Ti) et en aluminium (Al) consistant :
a) à placer au préalable une poudre de superalliage à base de Ni possédant une teneur substantielle en Ti et en Al sur un substrat d'une composition sensiblement identique ou similaire à la poudre de superalliage à base de Ni ;
b) à préchauffer la poudre placée au préalable jusqu'à une température supérieure à 1200 °C avec une première source de chaleur ;
c) à faire fondre la poudre placée au préalable en une ou plusieurs passes du faisceau d'énergie dirigée d'une seconde source de chaleur de sorte à produire une zone touchée par la chaleur d'une largeur inférieure à 100 microns, à retirer la seconde source de chaleur lorsque la fusion est achevée ;
d) à exécuter avec la première source de chaleur un refroidissement par palier et maintien régulé de la poudre placée au préalable de telle sorte qu'une fraction connue de la phase γ' se forme pendant le refroidissement par palier et maintien, et
e) à régler le refroidissement par palier et maintien de telle sorte que le partage de l'Al et du Ti entre les phases γ et γ' pendant l'accumulation additive entraîne une réduction de la tendance aux criques,
étant entendu que le refroidissement par palier et maintien s'effectue à partir d'une température initiale T₁ de 1200 °C ou plus et jusqu'à température ambiante, et consiste en une pluralité d'étapes :
a. maintien à T₁ pendant un temps de l'ordre de 1 min à 3 min ;
b. refroidissement jusqu'à une température T₂ inférieure à T₁ et maintien pendant un temps de l'ordre de 2 min à 15 min de sorte à produire moins de 20 % en poids de phase γ' ;
c. refroidissement jusqu'à une température T₃ inférieure à T₂ et maintien pendant un temps de l'ordre de 2 min à 30 min de sorte à produire moins de 20 % en poids de phase γ' ;
d. refroidissement jusqu'à une température T₄ inférieure à T₃ et maintien pendant un temps de l'ordre de 6 min à 120 min de sorte à produire moins de 20 % en poids de phase γ', et
e. refroidissement jusqu'à température ambiante en une pluralité de paliers de refroidissement allant de T₄ jusqu'à température ambiante étant entendu que la température est maintenue à chaque palier pendant 1 heure à 20 heures de sorte à produire moins de 20 % en poids de phase γ'.

2. Procédé selon la revendication 1 étant entendu que l'épaisseur de l'accumulation additive est de l'ordre de 1 millimètre à 10 millimètres.

3. Procédé selon la revendication 1 étant entendu que la poudre placée au préalable possède une granulométrie de l'ordre de 10 microns à 100 microns.

4. Procédé selon la revendication 1 étant entendu que ledit superalliage à base de nickel est sélectionné dans le groupe constitué du 713C, 247, PW1480, MARM200, R77, PW1483, R80, U720, 738 et de leurs mélanges.
